# FASCICULE DE BREVET EUROPEEN

(11) **EP 2 002 962 B1**
(45) Date de publication et mention de la délivrance du brevet: **17.08.2011**
(21) Numéro de dépôt: 08157861.9
(22) Date de dépôt: 09.06.2008
(51) Int. Cl.: B29C 49/68, B29B 13/02, B29B 13/08, B29C 49/06, B29C 49/64

(54) **Installation de chauffage des corps de préformés pour le soufflage de récipients**
Anlage zum Aufheizen der Vorformlinge für das Blasen von Behältern
Installation for heating bodies of preformed elements for blowing containers

(30) Priorité: 11.06.2007 FR 0704144
(43) Date de publication de la demande: 17.12.2008
(73) Titulaire: Sidel Participations, 76930 Octeville Sur Mer (FR)
(72) Inventeur: Plantamura, Bernard, 76930 Octeville-sur-Mer (FR)
(74) Mandataire: Cabinet Plasseraud

(56) Documents cités:
- WO-A-2006/069261
- FR-A- 2 878 185
- US-A1- 2002 062 161

## Description

La présente invention concerne, d'une façon générale, la fabrication de récipients en matière thermoplastique telle que le PET par soufflage ou étirage-soufflage de préformes, et elle concerne plus particulièrement les installations de chauffage des corps de préformes en matière thermoplastique, en vue de la fabrication de récipients par soufflage ou étirage-soufflage, tandis que lesdites préformes sont déplacées de manière que leurs corps respectifs suivent une trajectoire prédéterminée, ces installations de chauffage comportant au moins une source de rayonnement électromagnétique infrarouge disposée latéralement à la trajectoire suivie par les corps des préformes et dirigée vers un emplacement de ladite trajectoire, un réflecteur étant disposé de l'autre côté de la trajectoire opposé à celui où est disposée la source de rayonnement électromagnétique.

Les installations de fabrication de récipients en matière thermoplastique comprennent, pour chauffer les préformes préalablement à l'étape de soufflage ou d'étirage-soufflage, des installations de chauffage par exemple du type four tunnel qui traditionnellement sont équipées de lampes à incandescence à rayonnement infrarouge.

Des tentatives ont cependant été faites pour la mise en oeuvre de moyens de chauffage de type différent tel que le chauffage à l'aide d'un rayonnement électromagnétique infrarouge cohérent du type rayonnement laser. Un tel rayonnement offre l'avantage d'être plus directif et de permettre de chauffer les corps des préformes de façon beaucoup plus précise et mieux localisée que les moyens de chauffage à rayonnement infrarouge traditionnels dont la dispersion angulaire est relativement importante ; il offre également l'avantage d'une absorption plus homogène de la chaleur au sein de l'épaisseur de la paroi de la préforme.

Dans une première mise en oeuvre possible (par exemple figures 6 et 7 du document FR 2 878 185), la ou chaque source de rayonnement électromagnétique infrarouge cohérent est dirigée sensiblement perpendiculairement à la trajectoire suivie par les corps des préformes. Un tel agencement donne certes satisfaction pour le chauffage des corps des préformes, notamment pour ce qui est de la sélectivité de ce chauffage lorsqu'une telle sélectivité est recherchée, mais il présente aussi des inconvénients.

Un inconvénient de cet agencement connu réside dans le fait que le rayonnement traverse chaque corps en échauffant la matière de celui-ci, mais n'est pas complètement absorbé. La fraction du rayonnement qui n'a pas été absorbée est réfléchie par un réflecteur disposé en vis-à-vis de la source et est renvoyée en direction des corps des préformes et des sources. Cependant, cette réflexion s'accompagne d'une absorption partielle et d'un échauffement du réflecteur, entraînant une perte d'énergie. De ce fait, le rendement d'un tel agencement de chauffage n'est pas optimum.

Au surplus, une partie de la fraction réfléchie du rayonnement peut revenir sur la source, ce qui est préjudiciable à la durée de vie de celle-ci.

Un autre inconvénient de cet agencement connu réside dans le fait que, lorsqu'un intervalle entre les corps de deux préformes consécutives se présente en regard de la source de rayonnement électromagnétique, c'est alors la totalité du rayonnement émis par celle-ci qui parvient sur le réflecteur et qui, en plus grande partie, est réfléchi vers la source, avec un risque d'endommagement, voire de destruction de celle-ci. Certes, il serait possible d'envisager que le rayonnement ne soit émis que pendant la durée de défilement du corps d'une préforme en regard de la source et que l'émission du rayonnement soit interrompue lorsque c'est un intervalle entre les corps de deux préformes consécutives qui se présente en regard de la source. Une telle solution pourrait être mise en oeuvre, par exemple, par une excitation séquentielle de la source qui fonctionnerait alors de façon discontinue, en synchronisme avec la vitesse de défilement des préformes. Il en résulterait toutefois une installation complexe et coûteuse à réaliser et à maintenir en état de fonctionnement correct.

Dans une autre mise en oeuvre possible (par exemple figures 9 et 10 du même document FR 2 878 185), la ou chaque source de rayonnement électromagnétique infrarouge cohérent est dirigée sensiblement selon la trajectoire suivie par les corps des préformes, de telle sorte que le rayonnement traverse successivement une pluralité de corps de préformes consécutives. Un tel agencement donne certes satisfaction pour le chauffage, en tant que tel, des corps des préformes et le rendement peut être considéré comme meilleur que celui de la solution précédente. Toutefois, cet agencement connu présente un inconvénient inhérent au fait que la trajectoire des corps des préformes doit être déviée de la source juste en amont de celle-ci, autrement dit le transporteur déplaçant les préformes doit faire un coude devant la source.

D'autre part, selon le matériau constitutif des préformes, l'absorption du rayonnement électromagnétique est plus ou moins importante, et une installation dans laquelle la distance entre les sources de rayonnement est fixe ne permet pas de traiter avec un bon rendement un grand nombre de types de préformes constituées de matériaux thermoplastiques de caractéristiques différentes et ayant des comportements différents.

Il en résulte que, si plusieurs sources doivent être implantées les unes à la suite des autres pour obtenir la puissance de chauffe requise, le transporteur des préformes doit présenter autant de moyens de déviations (coudes et/ou roues de transfert) pour dévier à chaque fois la trajectoire des corps des préformes. Un tel transfert des préformes sur une trajectoire sinueuse est doublement pénalisant, d'une part parce que le transporteur devient de réalisation complexe et coûteuse et d'autre part parce que la présence des sinuosités ne permet pas de faire défiler les préformes à des vitesses aussi élevées qu'il pourrait être souhaité.

L'invention a pour but de proposer une solution technique perfectionnée qui écarte, dans toute la mesure du possible, les inconvénients présentés par les solutions déjà connues et qui notamment autorise la mise en oeuvre d'un rayonnement électromagnétique infrarouge aux fins de chauffage des corps de préformes en matière thermoplastique avec un rendement amélioré et sans risque pour la source de rayonnement électromagnétique, ces avantages devant au surplus pouvoir être obtenus sans surcoût notable de l'installation.

A ces fins, l'invention propose une installation de chauffage des corps de préformes en matière thermoplastique, telle que définie par la revendication 1.

Grâce à un tel agencement, on assure que le rayonnement électromagnétique n'est pas réfléchi ou n'est que faiblement réfléchi vers ladite source de rayonnement électromagnétique ou vers une source voisine de rayonnement électromagnétique : le rayonnement réfléchi parviendra alors latéralement sur la source en frappant la partie active de celle-ci (notamment la face frontale de celle-ci) sous une incidence faible et de façon quasi rasante, sans qu'il puisse en résulter un endommagement notable de la source.

De plus, la fourchette angulaire mentionnée permet d'assurer que, par un choix approprié de l'angle α en fonction du diamètre des préformes et de leur pas d'espacement sur le transporteur, au moins une majeure partie du rayonnement parvient en permanence sur au moins un corps de préforme et/ou sur une ou plusieurs parties de corps de préformes. Autrement dit, l'intervalle défini entre les corps de deux préformes successives, vu depuis la source, reste faible, voire de préférence est nul, de sorte qu'au plus une faible partie du rayonnement peut passer entre les préformes consécutives et atteint le réflecteur disposé sur la paroi opposée.

Dans ce contexte, il s'avère préférable que ledit angle soit inférieur à environ 45°. Grâce à un tel agencement, on assure que le rayonnement électromagnétique n'est pas réfléchi vers ladite source de rayonnement électromagnétique ou vers une source voisine de rayonnement électromagnétique : le rayonnement réfléchi parviendra alors latéralement sur la source en frappant le boîtier ou l'enveloppe de celle-ci, mais ne pourra pas parvenir sur la partie active sur la face frontale de la partie émettrice proprement dite de la source.

Au surplus, les possibilités d'interception totale ou partielle du rayonnement par les corps ou parties de corps des préformes successives sont sensiblement améliorées par rapport à ce qui a été présenté plus haut.

Dans le souci d'optimiser le rendement de l'installation, il est souhaitable que la totalité du rayonnement électromagnétique émis par la source directive puisse atteindre en permanence au moins un corps de préformes ou plusieurs parties de corps de préformes quelle que soient les positions relatives des préformes en défilement par rapport à la source. Cette condition sera plus aisément satisfaite pour un plus grand nombre de tailles de préformes de diamètres moyens ou gros et de divers pas d'espacement des préformes successives si la source directive de rayonnement électromagnétique est inclinée d'un angle compris entre environ 20° et 31° par rapport à la tangente à ladite trajectoire audit emplacement.

Par contre dans le cas de préformes de relativement petits diamètres (par exemple un diamètre d'un ordre de grandeur d'environ 15 mm), on pourra prévoir que l'angle d'inclinaison précité soit compris entre environ 12° et 20°.

De plus, grâce à ces dispositions, non seulement on est assuré que la totalité du rayonnement électromagnétique émis par la source directive atteint, en permanence, un corps de préforme et/ou une ou plusieurs parties de corps de préformes, mais aussi que le rayonnement électromagnétique, du fait de son inclinaison par rapport à l'axe de déplacement des préformes, traverse successivement plusieurs corps ou parties de corps de préformes situés les uns à la suite des autres de sorte que la capacité d'apport calorifique par le rayonnement électromagnétique est exploitée au maximum.

Il est remarquable que ces dispositions sont très simples à mettre en oeuvre et qu'elles n'entraînent pas de modifications fondamentales dans la conception et l'arrangement de l'installation de chauffage. Enfin, leur mise en oeuvre pratique n'implique pas l'adjonction d'un matériel additionnel notable et repose essentiellement sur une redistribution géométrique de certains composants.

La trajectoire suivie par les corps des préformes peut être curviligne audit emplacement, et il est alors souhaitable que la source directive de rayonnement électromagnétique soit disposée du côté convexe de ladite trajectoire. Cependant, la configuration la plus courante en pratique consiste en ce que la trajectoire suivie par les corps des préformes soit sensiblement rectiligne audit emplacement considéré, et la source directive de rayonnement électromagnétique peut alors être disposée indifféremment d'un côté ou de l'autre de ladite trajectoire.

De même, on peut prévoir que la source directive de rayonnement électromagnétique soit dirigée à contresens du sens de déplacement des préformes, ou bien de façon plus générale que la source directive de rayonnement électromagnétique soit au contraire dirigée dans le sens de déplacement des préformes. Il faut noter qu'un mode d'exploitation intéressant peut consister à combiner ces deux dispositions et à prévoir alors que l'installation comporte au moins deux sources directives de rayonnement électromagnétique, qu'au moins une source directive de rayonnement électromagnétique soit dirigée dans le sens de déplacement des préformes et qu'au moins une autre source directive de rayonnement électromagnétique, située en aval de la précédente, soit quant à elle dirigée à contresens du sens de déplacement des préformes : ainsi, dans un exemple d'application de cette disposition qui peut alors être mise en oeuvre en sortie du four, il est possible de fournir une ultime impulsion thermique à un emplacement prédéterminé du corps ou d'une partie du corps de la préforme au moment où celle-ci quitte l'installation de chauffage et immédiatement avant son introduction dans l'installation de soufflage, de sorte que le corps de la préforme peut être déformé dans des conditions optimales y compris dans ses zones à déformation difficile.

Toujours dans le contexte de la pratique, il est possible que la source directive de rayonnement électromagnétique soit sensiblement monochromatique (ou quasi monochromatique, c'est-à-dire couvrant une fenêtre étroite de fréquences électromagnétiques), le rayonnement pouvant en outre avantageusement être collimaté. De façon concrète, ladite source directive de rayonnement électromagnétique peut être une source laser, et notamment une diode laser. Bien entendu, en tant que de besoin plusieurs diodes pourront être groupées pour constituer une source directive de forme et d'étendue appropriées aux besoins.

L'invention sera mieux comprise à la lecture de certains modes de réalisation donnés uniquement à titre d'exemples nullement limitatifs. Dans cette description, on se réfère au dessin annexé sur lequel :
- la figure 1 est une représentation très schématique, en vue de dessus, d'un mode de réalisation préféré des dispositions de l'invention ;
- la figure 2 est une représentation très schématique, en vue de dessus, d'un autre mode de réalisation possible des dispositions de l'invention ; et
- la figure 3 est une représentation très schématique, en vue de dessus, d'un exemple d'implantation concret de plusieurs sources directives de rayonnement électromagnétique infrarouge sensiblement monochromatique dans le contexte du mode de réalisation préféré de la figure 1.

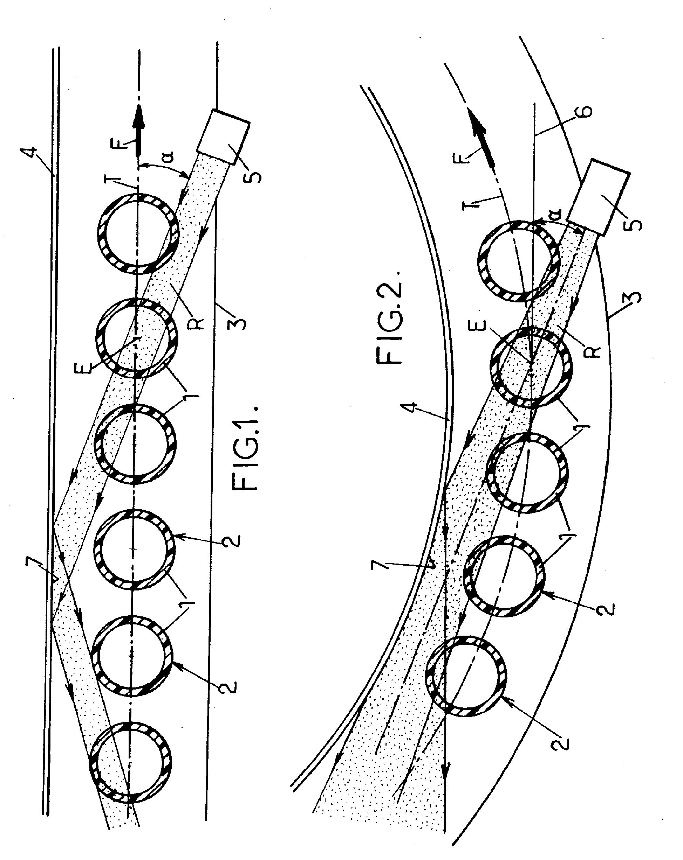

En se reportant tout d'abord à la figure 1, il y est représenté, sous une forme très schématisée et en vue de dessus, seulement une partie, nécessaire à la compréhension de l'invention, d'une installation de chauffage des corps 1 de préformes 2 en matière thermoplastique, en vue de la fabrication de récipients par un processus de soufflage ou d'étirage-soufflage. Au sein de cette installation de chauffage, les préformes 2 sont déplacées, par un transporteur approprié (non montré), de manière que leurs corps 1 respectifs suivent une trajectoire T prédéterminée. Le sens de déplacement des préformes 2 est indiqué par la flèche F. Dans les installations de grande capacité dans lesquelles les préformes sont déplacées à vitesse élevée, l'installation de chauffage se présente en général sous la forme d'au moins un four-tunnel bordé latéralement par deux parois latérales, désignées respectivement par les références 3 et 4 à la figure 1.

A la figure 1 est illustrée à titre d'exemple une configuration classique, et généralement mise en oeuvre, d'un four-tunnel qui consiste en ce que le four-tunnel soit rectiligne au moins en partie et que la trajectoire T de déplacement des préformes 2 soit rectiligne dans cette portion du four.

Dans le contexte visé par l'invention, l'installation de chauffage comporte au moins une source 5 de rayonnement électromagnétique infrarouge qui est une source directive disposée latéralement à la trajectoire T suivie par les corps 1 des préformes 2 et dirigée vers un emplacement E de la trajectoire T suivie par les corps 1 des préformes 2. Le rayonnement R électromagnétique infrarouge émis par la source 5 directive peut être sensiblement monochromatique (ou quasi monochromatique, c'est-à-dire couvrant une fenêtre étroite de fréquences électromagnétiques), le rayonnement pouvant également être avantageusement collimaté. Comme illustré à la figure 1, la source 5 directive est supportée par l'une des parois du four, par exemple la paroi 3, et de l'autre côté de la trajectoire T un réflecteur 7 s'étend au moins à l'emplacement de la paroi 4 opposée où la direction de propagation du rayonnement R atteint ladite paroi 4.

La source 5 directive de rayonnement électromagnétique est inclinée d'un angle α compris entre environ 60° et 10° par rapport à la tangente 6 à ladite trajectoire T audit emplacement E, de sorte que le rayonnement électromagnétique ne puisse pas être réfléchi ou ne soit que faiblement réfléchi vers la source 5 de rayonnement électromagnétique ou une source voisine ; le rayonnement réfléchi parvient alors latéralement sur la source, mais n'atteint la partie active de celle-ci (c'est-à-dire la face frontale de celle-ci) que sous une incidence faible et de façon quasi rasante : la source ne peut alors pas subir d'endommagement important ni d'échauffement susceptible de perturber son fonctionnement correct.

De plus, la fourchette angulaire mentionnée permet d'assurer que, par un choix approprié de l'angle α en fonction du diamètre des préformes et de leur pas d'espacement sur le transporteur, au moins une majeure partie du rayonnement parvient en permanence sur au moins un corps de préforme ou sur plusieurs parties de corps de préformes. Autrement dit, l'intervalle défini entre les corps de deux préformes successives, vu depuis la source, reste faible, voire de préférence est nul, de sorte qu'au plus une faible partie du rayonnement peut passer entre les préformes consécutives et atteindre le réflecteur disposé sur la paroi opposée.

Ainsi pour fixer les idées, dans le cas du traitement de préformes ayant un gros diamètre (par exemple un diamètre d'un ordre de grandeur d'environ 40 mm), les corps ou parties de corps des préformes successives vont intercepter la totalité du rayonnement électromagnétique, tandis que, dans le cas du traitement de préformes ayant un diamètre moyen (par exemple un diamètre d'un ordre de grandeur d'environ 20 mm), une fraction du rayonnement pourra certes passer à travers l'intervalle libre défini entre deux préformes consécutives, mais il s'agit alors d'une fraction relativement faible du rayonnement et il n'en résulte pas un inconvénient notable.

De façon préférée, on pourra faire en sorte que l'angle α reste inférieur à environ 45°, de sorte qu'alors le rayonnement électromagnétique ne puisse pas être réfléchi, même partiellement, vers la source 5 de rayonnement électromagnétique ou une source voisine ; autrement dit, le rayonnement électromagnétique ne peut pas être réfléchi vers la partie active (autrement dit vers la face frontale) de ladite source 5 de rayonnement électromagnétique ou d'une source voisine, le rayonnement réfléchi par le réflecteur 7 pouvant par contre atteindre la source 5 ou une autre source de façon latérale en frappant le boîtier ou enveloppe de celle-ci sans dommage pour la partie active proprement dite de la source.

Dans le souci d'optimiser le rendement de l'installation, il est souhaitable que la totalité du rayonnement électromagnétique émis par la source directive puisse atteindre en permanence au moins un corps de préformes ou plusieurs parties de corps de préformes quelles que soient les positions relatives des préformes en défilement par rapport à la source. Cette condition sera plus aisément satisfaite pour un plus grand nombre de tailles de préformes de diamètres moyens ou gros (par exemple des diamètres variant autour d'un ordre de grandeur d'environ 20 à 45 mm) et de divers pas d'espacement des préformes successives si la source directive de rayonnement électromagnétique est inclinée d'un angle compris entre environ 20° et 31° par rapport à la tangente à ladite trajectoire audit emplacement.

Si on considère à titre d'exemple le cas pratique des installations de chauffage produites actuellement par la Demanderesse, les préformes sont écartées les unes des autres avec un pas de 40 mm ou de 50 mm ; les installations agencées avec un pas de 40 mm peuvent accepter des préformes pouvant, selon les modèles, avoir des corps présentant des diamètres compris entre environ 19 et 36 mm ; les installations agencées avec un pas de 50 mm peuvent accepter des préformes pouvant, selon les modèles, avoir des corps présentant des diamètres compris entre environ 19 et 43 mm. On sera alors assuré que la totalité du rayonnement électromagnétique émis par une source directive parvient en permanence sur un corps ou des parties de corps de préformes si l'angle α est compris, comme précité, entre environ 20° et 31°.

Par contre, dans le cas de préformes de relativement petits diamètres (par exemple un diamètre d'un ordre de grandeur d'environ 15 mm), on pourra prévoir que l'angle d'inclinaison précité soit compris entre environ 12° et 20°.

Dans la configuration d'un four-tunnel rectiligne ou d'une portion de four-tunnel rectiligne comme montré à la figure 1, la source 5 directive de rayonnement électromagnétique peut être disposée indifféremment d'un côté ou de l'autre de la trajectoire T, autrement dit la source 5 directive peut être supportée par la paroi 4 et les moyens de réflexion être supportés par la paroi 3, en fonction des impératifs d'agencement de l'installation ; on peut également envisager de monter plusieurs sources directives à la fois sur les deux parois 3, 4 en prenant soin que chaque source 5 directive ne reçoive pas le rayonnement, incident ou réfléchi, provenant d'une ou plusieurs autres sources.

A la figure 2, on a représenté une configuration différente, moins courante en pratique, qui consiste en ce que la trajectoire T suivie par les corps 1 des préformes 2 soit curviligne (par exemple sensiblement circulaire comme illustré à la figure 2) audit emplacement E. Dans ce cas, la source 5 directive de rayonnement électromagnétique est inclinée du susdit angle α par rapport à la tangente 6 à ladite trajectoire T à l'emplacement E.

Pour faire le parallèle avec la représentation de la figure 1, l'installation de chauffage est alors supposée comporter un four-tunnel curviligne dont les parois 3, 4 latérales sont curvilignes. Il en résulte en particulier que les moyens réflecteurs supportés par la paroi 4 sont, dans la représentation adoptée à la figure 2, du type réflecteur convexe. Dans une telle configuration, il est avantageux que la source 5 directive de rayonnement électromagnétique soit disposée du côté convexe de la trajectoire T de manière à être assuré qu'elle ne reçoive aucun rayonnement réfléchi.

Bien entendu, il demeure possible de disposer la source 5 directive de rayonnement électromagnétique du côté concave de la trajectoire T. Cependant, les moyens réflecteurs deviennent, eux aussi, de type réflecteur concave et le rayonnement est réfléchi sous forme d'un faisceau largement divergent. Il est alors plus compliqué, d'un point de vue structurel, de faire en sorte que tout ou partie de ce rayonnement réfléchi ne parvienne pas sur la source 5 ou une source 5, la difficulté étant encore accrue dans le cas de l'implantation de plusieurs sources échelonnées le long de la trajectoire T.

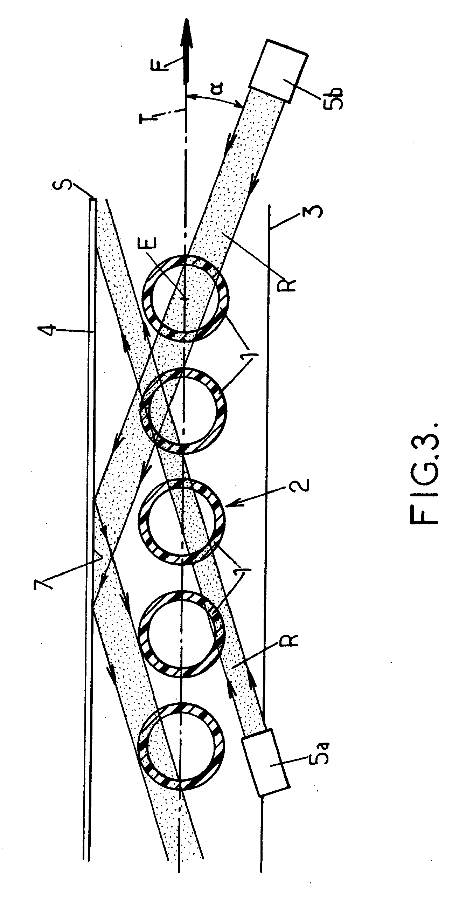

Il est possible de prévoir que la source 5 directive de rayonnement électromagnétique soit dirigée à contresens du sens F de déplacement des préformes 2, comme montré aux figures 1 et 2. Mais il est également parfaitement envisageable de faire en sorte que la source 5 directive de rayonnement électromagnétique soit dirigée dans le sens F de déplacement des préformes 2. Une solution intéressante peut consister à combiner les deux possibilités et à prévoir, comme montré à la figure 3 dans la configuration d'un four ou d'une portion de four rectiligne, les dispositions suivantes :
- l'installation de chauffage comporte au moins deux sources 5 directives de rayonnement électromagnétique,
- parmi celles-ci, au moins une source 5a directive de rayonnement électromagnétique est dirigée dans le sens F de déplacement des préformes 2, et
- au moins une autre source 5b directive de rayonnement électromagnétique, située en aval (considéré par rapport au sens F de déplacement des préformes), est dirigée à contresens du sens F de déplacement des préformes 2.

Un tel agencement peut trouver une application particulière, bien que non exclusive, qui est intéressante en sortie S du four : la ou les sources 5b directives dirigées en sens inverse du sens de déplacement des préformes permet de finaliser l'apport thermique additionnel juste au moment où les préformes atteignent la sortie S du four et sont saisies par les moyens de transfert qui vont les amener aux moules respectifs, autrement dit très peu de temps avant qu'elles soient introduites dans les moules respectifs.

On soulignera également que, toujours dans le but de réduire au maximum les pertes, il est envisageable de disposer d'autres réflecteurs (non montrés sur les dessins) sur la paroi 3 qui supporte la source 5 ; dans le cas de la mise en oeuvre de plusieurs sources 5 en positions décalées le long de la trajectoire T, on pourra disposer ces réflecteurs additionnels notamment entre les sources 5.

Dans le contexte de l'invention, la source 5 directive de rayonnement électromagnétique peut être une source laser, typiquement sous forme d'au moins une diode laser qui est de faible encombrement et est aujourd'hui couramment disponible.

Le rayonnement électromagnétique peut être conformé de toute façon appropriée en fonction de l'application et du résultat à obtenir, notamment selon l'étendue, la position et la forme de la zone à chauffer sur les corps des préformes. Ainsi, le faisceau de rayonnement électromagnétique peut avantageusement être collimaté pour former un faisceau à bords sensiblement parallèles comme montré à titre d'exemple à la figure 1, ou bien être divergent comme montré à titre d'exemple à la figure 2.

En pratique, on mettra en général en oeuvre plusieurs diodes laser juxtaposées pour former un faisceau de forme appropriée au chauffage à apporter aux corps des préformes. On pourra notamment constituer un faisceau plat horizontal comme montré à titre d'exemple aux figures 1 et 2, mais on peut tout aussi facilement constituer un faisceau plat vertical (non montré), ou incliné si nécessaire.

La mise en oeuvre de moyens de chauffage agencés conformément à l'invention peut donner lieu à diverses variantes de conception de l'installation de chauffage. On peut ainsi envisager que l'ensemble de l'installation de chauffage soit constituée avec des sources directives agencées conformément à l'invention. Toutefois, les sources directives actuellement disponibles étant des sources laser qui sont relativement onéreuses, on peut envisager de ne constituer conformément à l'invention qu'une ou des parties de l'installation de chauffage alors que le reste de l'installation demeure équipée de lampes traditionnelles moins coûteuses ; on peut en particulier prévoir d'équiper conformément à l'invention la partie terminale, voisine de la sortie, de l'installation de chauffage come cela a été expliqué plus haut.

On précise également que, par le terme de source, on entend désigner non seulement l'émetteur proprement dit de rayonnement, mais également, s'il y a lieu, l'ensemble des organes et dispositifs annexes qui peuvent être associés à l'émetteur pour engendrer le rayonnement de forme souhaitée à l'emplacement requis sur la paroi 3 du four (par exemple dispositif collimateur, conduit optique tel que fibre(s) optique(s) permettant de projeter le rayonnement à l'emplacement souhaité alors que l'émetteur est positionné à l'écart, ...).

## Revendications

1. Installation de chauffage des corps (1) de préformes (2) en manière thermoplastique, en vue de là fabrication de récipients par soufflage ou étirage-soufflage, tandis que lesdites préformes (2) sont déplacées de manière que leurs corps (1) respectifs suivent une trajectoire (T) prédéterminée, ladite trajectoire étant au moins en partie rectiligne ou au moins en partie curinligne, cette installation de chauffage comportant au moins une source (5) de rayonnement électromagnétique infrarouge disposée latéralement à la trajectoire (T) suivie par les corps (1) des préformes (2) et dirigée vers un emplacement (E) de ladite trajectoire (T), un réflecteur (7) étant disposé de l'autre côté de la trajectoire (T) opposé à celui où est disposée la source (5) de rayonnement électromagnétique, **caractérisée en ce que** ledit réflecteur (7) présente un profil qui correspond à celui de ladite trajectoire (T) et **en ce que** ladite source (5) de rayonnement électromagnétique infrarouge est une source directive qui est inclinée d'un angle (α) compris entre environ 60° et 10° par rapport à la tangente (6) audit réflecteur (7).

2. Installation de chauffage selon à revendication 1, **caractérisée en ce que** ledit angle (α) est inférieur à environ 45°,

3. Installation selon la revendication 2, **caractérisée en ce que** ledit angle (α) est compris entre environ 20° et 31°.

4. Installation de chauffage selon la revendication 2, **caractérisée en ce que** ledit angle (α) est compris entre environ 12° et 20°.

5. Installation de chauffage selon l'une quelconque des revendications 1 à 4, **caractérisée en ce que** la trajectoire (T) suivie par les corps (1) des préformes (2) est sensiblement rectiligne audit emplacement (E) et **en ce que** la source (5) directive de rayonnement électromagnétique peut être disposée indifféremment d'un côté ou de l'autre de ladite trajectoire (T).

6. Installation de chauffage selon l'une quelconque des revendications 1 à 4, **caractérisée en ce que** la trajectoire (T) suivie par les corps (1) des préformes (2) est curviligne audit emplacement (E).

7. Installation de chauffage selon la revendication 6, **caractérisée en ce que** la source (5) directive de rayonnement électromagnétique est disposée du côté convexe de ladite trajectoire (T).

8. Installation de chauffage selon l'une quelconque des revendications 1 à 7, **caractérisée en ce que** la source (5) directive de rayonnement électromagnétique est dirigée dans le sens (F) de déplacement des préformes (2).

9. Installation de chauffage selon l'une quelconque des revendications 1 à 7, **caractérisée en ce que** la source (5) directive de rayonnement électromagnétique est dirigée à contresens du sens (F) de déplacement des préformes (2).

10. Installation de chauffage selon les revendications 8 et 9, **caractérisée en ce qu'**elle comporte au moins deux sources (5) directives de rayonnement électromagnétique, **en ce qu'**au moins une source (5a) directive de rayonnement électromagnétique est dirigés dans le sens (F) de déplacement des préformes (2) et **en ce qu'**au moins une source (5b) directive de rayonnement électromagnétique, située en aval de la précédente, est dirigée à contresens du sens (F) de déplacement des préformes (2).

11. Installation de chauffage selon l'une quelconque des revendications 1 à 10, **caractérisée en ce que** ladite source (5) directive de rayonnement électromagnétique est une source laser.

12. Instillation de chauffage selon la revendication 11, **caractérisée en ce que** ladite source (5) directive de rayonnement électromagnétique est une diode laser.

## Claims

1. Installation for heating the bodies (1) of thermoplastic preforms (2) with a view to manufacturing containers by blow-moulding or stretch-blow-moulding, while said preforms (2) are being moved along in such a way that their respective bodies (1) follow a predetermined path (T), said path being at least partially straight or at least partially curved, this heating installation comprising at least one source (5) of infrared electromagnetic radiation positioned to the side of the path (T) followed by the bodies (1) of the preforms (2) and directed towards a location (E) on said path (T), a reflector (7) being positioned on the other side of the path (T)opposite to the side where the source (5) of electromagnetic radiation is positioned,
wherein said reflector (7) comprises a profile which corresponds to the profile of said path (T) and wherein said source (5) of infrared electromagnetic radiation is a directional source inclined by an angle (α) of between about 60° and 10° with respect to the tangent to said reflector (7).

2. Heating installation according to Claim 1, wherein said angle (α) is less than about 45°.

3. Installation according to Claim 2, wherein said angle (α) is between about 20° and 31°.

4. Heating installation according to Claim 2, wherein the said angle (α) is between about 12° and 20°.

5. Heating installation according to any one of Claims 1 to 4, wherein the path (T) followed by the bodies (1) of the preforms (2) is substantially straight at said location (E) and wherein the directional source (5) of electromagnetic radiation can be positioned with equal preference on either side of said path (T).

6. Heating installation according to any one of Claims 1 to 4, wherein the path (T) followed by the bodies (1) of the preforms (2) is curved at said location (E).

7. Heating installation according to Claim 6, wherein the directional source (5) of electromagnetic radiation is positioned on the convex side of said path (T).

8. Heating installation according to any one of Claims 1 to 7, wherein the directional source (5) of electromagnetic radiation faces in the direction (F) of travel of the preforms (2).

9. Heating installation according to any one of Claims 1 to 7, wherein the directional source (5) of electromagnetic radiation faces in the opposite direction to the direction (F) of travel of the preforms (2).

10. Heating installation according to Claims 8 and 9, wherein it comprises at least two directional sources (5) of electromagnetic radiation, wherein at least one directional source (5a) of electromagnetic radiation faces in the direction (F) of travel of the preforms (2), and wherein at least one directional source (5b) of electromagnetic radiation, preferably located downstream of the previous one, faces in the direction opposite to the direction (F) of travel of the preforms (2).

11. Heating installation according to any one of Claims 1 to 10, wherein said directional source (5) of electromagnetic radiation is a laser source.

12. Heating installation according to Claim 11, wherein said directional source (5) of electromagnetic radiation is a laser diode.

## Patentansprüche

1. Aufheizvorrichtung für Körper (1) von Vorformlingen (2) aus thermoplastischem Material im Hinblick auf die Herstellung von Behältern über Blasziehen oder Streck-Blasziehen, während die Vorformlinge (2) auf eine Weise bewegt werden, dass ihre Körper (1) jeweils einer festgesetzten Trajektorie (T) folgen, wobei die Trajektorie zumindest abschnittsweise gerade oder abschnittsweise gekrümmt ist, die Aufheizvorrichtung mindestens eine Quelle (5) elektromagnetischer Infrarotstrahlung umfasst, die seitlich von der Trajektorie, der die Körper (1) der Vorformlinge (2) folgen, angeordnet und in Richtung einer Stelle (E) der Trajektorie (T) ausgerichtet ist und wobei ein Reflektor (7) auf der anderen Seite der Trajektorie (T) angeordnet ist, die der der Quelle (5) elektromagnetischer Strahlung gegenüberliegt,
**dadurch gekennzeichnet, dass** der Reflektor (7) ein zu der Trajektorie (T) korrespondierendes Profil aufweist und dadurch, dass die Quelle (5) elektromagnetischer Infrarotstrahlung eine gerichtete Quelle ist, die um einen Winkel (α) zwischen ungefähr 60° und 10° zur Tangente (6) hin zum Reflektor (7) geneigt ist.

2. Aufheizvorrichtung gemäß Anspruch 1, **dadurch gekennzeichnet, dass** der Winkel (α) kleiner als ungefähr 45° ist.

3. Aufheizvorrichtung gemäß Anspruch 2, **dadurch gekennzeichnet, dass** der Winkel (α) zwischen ungefähr 20° und 31° ist.

4. Aufheizvorrichtung gemäß Anspruch 2, **dadurch gekennzeichnet, dass** der Winkel (α) zwischen ungefähr 12° und 20° ist.

5. Aufheizvorrichtung gemäß einem der Ansprüche 1 bis 4, **dadurch gekennzeichnet, dass** die von den Körpern (1) der Vorformlinge (2) gefolgte Trajektorie (T) im Wesentlichen geradlinig zu der Stelle (E) ist und dadurch, dass die gerichtete Quelle (5) elektromagnetischer Strahlung willkürlich auf der einen oder anderen Seite der Trajektorie (T) angeordnet sein kann.

6. Aufheizvorrichtung gemäß einem der Ansprüche 1 bis 4, **dadurch gekennzeichnet, dass** die von den Körpern (1) der Vorformlinge (2) gefolgte Trajektorie (T) zu der Stelle (E) bogenförmig ist.

7. Aufheizvorrichtung gemäß Anspruch 6, **dadurch gekennzeichnet, dass** die gerichtete Quelle (5) elektromagnetischer Strahlung auf der konvexen Seite der Trajektorie (T) angeordnet ist.

8. Aufheizvorrichtung gemäß einem der Ansprüche 1 bis 7, **dadurch gekennzeichnet, dass** die gerichtete Quelle (5) elektromagnetischer Strahlung in der Richtung (F) der Bewegung der Vorformlinge (2) ausgerichtet ist.

9. Aufheizvorrichtung gemäß einem der Ansprüche 1 bis 7, **dadurch gekennzeichnet, dass** die gerichtete Quelle (5) elektromagnetischer Strahlung entgegen der Richtung (F) der Bewegung der Vorformlinge (2) ausgerichtet ist.

10. Aufheizvorrichtung gemäß einem der Ansprüche 8 und 9, **dadurch gekennzeichnet, dass** sie mindestens zwei gerichtete Quellen (5) elektromagnetischer Strahlung umfasst, dadurch, dass mindestens eine gerichtete Quelle (5a) elektromagnetischer Strahlung in der Richtung (F) der Bewegung der Vorformlinge (2) ausgerichtet ist und dadurch, dass mindestens eine gerichtete Quelle (5b) elektromagnetischer Strahlung, die ablaufseitig zu der vorigen angeordnet ist, entgegen der Richtung (F) der Bewegung der Vorformlinge (2) ausgerichtet ist.

11. Aufheizvorrichtung gemäß einem der Ansprüche 1 bis 10, **dadurch gekennzeichnet, dass** die gerichtete Quelle (5) elektromagnetischer Strahlung eine Laserquelle ist.

12. Aufheizvorrichtung gemäß Anspruch 11, **dadurch gekennzeichnet, dass** die gerichtete Quelle (5) elektromagnetischer Strahlung ein Diodenlaser ist.
